# EUROPÄISCHE PATENTSCHRIFT

(11) **EP 3 254 887 B1**
(45) Veröffentlichungstag und Bekanntmachung des Hinweises auf die Patenterteilung: **15.04.2020**
(21) Anmeldenummer: 17172179.8
(22) Anmeldetag: 22.05.2017
(51) Int. Cl.: B60N 2/07, B60N 2/02, B60N 2/58, B60N 2/60, B60N 2/68, B60N 2/08, B60N 2/22

(54) **FAHRZEUGSITZ MIT KOMBINIERTEN VERSTELLMÖGLICHKEITEN**
VEHICLE SEAT WITH COMBINED ADJUSTMENT OPTIONS
SIÈGE DE VÉHICULE PRÉSENTANT UNE COMBINAISON DE POSSIBILITÉS DE RÉGLAGE

(30) Priorität: 06.06.2016 DE 102016110404
(43) Veröffentlichungstag der Anmeldung: 13.12.2017
(73) Patentinhaber: GRAMMER AG, 92224 Amberg (DE)
(72) Erfinder: Lorey, Alexander, 93142 Maxhütte-Haidhof (DE)
(74) Vertreter: Hannke, Christian

(56) Entgegenhaltungen:
- WO-A1-00/21787
- WO-A1-92/07735
- DE-U1- 9 421 432
- JP-A- 2003 320 880
- US-A1- 2006 103 211
- US-A1- 2012 318 949
- US-A1- 2013 257 113

## Beschreibung

Die Erfindung betrifft einen Fahrzeugsitz mit einem Sitzteil und einem Rückenlehnenteil gemäß dem Oberbegriff des Anspruchs 1.

Aus dem Stand der Technik sind bereits verschiedene Ausgestaltungen für Fahrzeugsitze mit Verstelleinrichtungen für die Tiefe oder die Neigung des Sitzteils bekannt. Dabei ist unter Sitztiefe beispielsweise der Abstand zwischen einem vorderen Ende des Sitzteils und der Anlehnfläche, also der vorderen Fläche, des Rückenlehnenteils zu verstehen.

Die Verstellmöglichkeiten dieser beiden Parameter "Sitztiefe" und "Sitzneigung" gehören zur Standardausstattung von Komfortsitzen und demzufolge zum Stand der Technik. Allerdings werden bisher die Verstellfunktionen getrennt, mithin einzeln verbaut und können auch nur einzeln angesteuert werden. Es zeigt beispielsweise die WO 00 21787 A1 einen Sitz mit einem Rückenlehnenteil und einem Sitzteil, wobei bei einer Verschiebung des Sitzteils in Längsrichtung ein vorderes Ende des Sitzteils und ein hinteres Ende des Sitzteils jeweils eine geradlinige Bewegung durchführen. Das hintere Ende des Sitzteils ist dabei mit dem Rückenlehnenteil verbunden.

Es ist daher Aufgabe der vorliegenden Erfindung, den Stand der Technik derart weiterzuentwickeln, so dass eine Kopplung der beiden Verstellmöglichkeiten zu einer kombinierten Verstellung realisiert wird. Dies bedeutet, dass beispielsweise mit einem Handgriff gleichzeitig mit der Verschiebung des Sitzpolsters in oder gegen die Fahrtrichtung eine Veränderung der Sitzneigung durchgeführt werden kann.

Diese Aufgabe wird gelöst von einem Fahrzeugsitz mit einem Sitzteil und einem Rückenlehnenteil, wobei das Sitzteil unterseitig schalenförmig ausgebildet ist, und wobei mittels einer Verstellbewegung des Sitzteils gegenüber einer unterhalb des Sitzteils angeordneten Sitztragschale zumindest ein vorderes Ende des Sitzteils kombiniert nach vorne und nach oben verschiebbar und die Neigung des Sitzteils verstellbar ist. Erfindungsgemäß ist mittels der Verstellbewegung des Sitzteils das vordere Ende des Sitzteils gegenüber der Sitztragschale entlang einer Kurvenbahn und ein hinteres Ende des Sitzteils gegenüber der Sitztragschale entlang einer Geraden nach vorne verschiebbar.

Es ist vorgesehen, dass bei einer Verschiebung des Sitzpolsters in Fahrtrichtung die Neigung des Sitzteils steiler, also größer wird. Analog dazu wird bei einer Verschiebung des Sitzpolsters gegen die Fahrtrichtung die Neigung des Sitzteils flacher.

Mittels einer einzigen Verstellbewegung des Sitzteils sind also ein Grad einer Tiefe und ein Grad einer Neigung des Sitzteils kombiniert verstellbar. Aus dieser kombinierten Verstellung ergeben sich zahlreiche Vorteile. So kann der Sitzinsasse mit nur einem Griff bzw. einer einzigen Betätigung eines Betätigungselements beide Parameter gleichzeitig verstellen. Da diese Parameter hinsichtlich ihrer Änderung bevorzugt aufeinander bzw. auf eine möglichst komfortable Sitzteileinstellung ausgerichtet sind, kann, wie später noch anhand der Figuren erläutert, für einen großen Anteil an sich hinsichtlich ihrer Körpergröße unterscheidenden Sitzinsassen jeweils eine ideale Komforteinstellung realisiert werden.

Weiterhin gilt natürlich, dass die Kosten für die Herstellung und die Montage des Fahrzeugsitzes sinken, da die integrierte Technik vereinfacht ist.

Bevorzugt sind die Abmessungen des Sitzteils mittels der Verstellbewegung nicht veränderbar; mit anderen Worten ist also insbesondere ein Abstand zwischen dem vorderen Ende und dem hinteren Ende des Sitzteils unabhängig von der Position des Sitzteils stets gleichbleibend ausgebildet.

Die Unterschenkellänge ist dabei anzunehmen als Abstand des Fahrzeugbodens bzw. einer Abstellfläche für die Schuhe des Sitzinsassen von einer Position des Knies des Sitzinsassen, welche wiederum oberhalb der Sitzfläche des Sitzteils angeordnet ist. Die Sitztiefe ist beispielsweise natürlich von der Oberschenkellänge des Sitzinsassen abhängig und entspricht dieser bevorzugt. Dabei wird die Oberschenkellänge im sitzenden Zustand des Sitzinsassen als Abstand zwischen Gesäß und Kniekehle vermessen.

Entsprechend einer Vermessung möglicher Sitzinsassen gemäß der Norm DIN CEN ISO/TR 7250-2 weist dabei im Durchschnitt ein erster Sitzinsasse, für welchen gilt, dass 5% aller möglichen Sitzinsassen kleiner sind als er, eine Unterschenkellänge von 405 mm und eine Oberschenkellänge von 435 mm auf. Ferner weist im Durchschnitt ein zweiter Mensch, für welchen gilt, dass 5% aller möglichen Sitzinsassen größer sind als er, eine Unterschenkellänge von 520 mm und eine Oberschenkellänge von 540 mm auf.

Dabei weist ein Wert einer Unterschenkellänge des Sitzinsassen zu einem Wert der Sitztiefe einen statistischen Korrelationswert von 0,64 auf. Hierbei beschreibt der Korrelationswert, welcher zwischen 0 und 1 (bzw. -1) liegen kann, das Maß der Abhängigkeit zweier Größen zueinander; so deutet ein Wert nahe 1 (bzw. nahe -1) auf eine sehr hohe Korrelation der beiden Größen hin, was entsprechend bei der Sitzkonstruktion berücksichtigt werden sollte.

Weiter bevorzugt ist dabei der Grad der Neigung des Sitzteils in Abhängigkeit des Grads der Sitztiefe so ausgestaltet, dass in einer Idealposition ein Verhältnis der Unterschenkellänge des Sitzinsassen zur Oberschenkellänge (bevorzugt entsprechend der Sitztiefe) des Sitzinsassen einen Wert aus einem Bereich von 0,93 bis 0,97 aufweist.

Wie oben beschrieben ist vorgesehen, dass mittels der Verstellbewegung des Sitzteils das vordere Ende des Sitzteils gegenüber der Sitztragschale entlang einer Kurvenbahn und das hintere Ende des Sitzteils gegenüber der Sitztragschale entlang einer Geraden nach vorne verschiebbar ist.

Wenn das vordere Ende und das hintere Ende als Referenzpunkte dargestellt werden, dann sind diese Bewegungslinien (Kurvenbahn und Gerade) jeweils als Funktionsgraph der Position der Referenzpunkte zu sehen. Mit anderen Worten erfahren mittels der Verstellbewegung des Sitzteils das vordere Ende des Sitzteils eine bogenförmige Bewegung und das hintere Ende des Sitzteils eine geradlinige Bewegung. So ist für maximale Flexibilität und bestmögliche Ausnutzung des Bauraums gesorgt.

Eine weitere nicht zur Erfindung gehörende Variante sieht vor, dass sowohl das hintere Ende als auch das vordere Ende jeweils entlang einer Kurvenbahn verschiebbar sind.

Weiterhin ist es bevorzugt, dass das Sitzteil unterseitig Nuten aufweist und auf der Sitztragschale oberseitig komplementär dazu ausgebildete Nutensteine angeordnet sind, welche bei der Verstellbewegung des Sitzteils gegenüber der Sitztragschale als Gleitelemente innerhalb der Nuten führbar sind. Diese Ausgestaltung sorgt für eine mechanisch sichere und reproduzierbare Führung des Sitzteils gegenüber der Sitztragschale.

Außerdem kann die Form und der Verlauf der Nuten genutzt werden, um die Veränderung der Sitztiefe und/ oder der Sitzneigung gezielt zu beeinflussen. So ist es denkbar, dass die Nuten in Längsrichtung und/ oder Höhenrichtung des Fahrzeugsitzes verlaufend angeordnet sind; weiter bevorzugt ist ein Verlauf der Nuten ohne Änderungen in Breitenrichtung und damit stets parallel zur Breitenrichtung des Fahrzeugsitzes ausgestaltet.

Weiter ist es denkbar, dass in Längsrichtung des Fahrzeugsitzes mindestens eine Nut, bevorzugt zwei Nuten aufeinanderfolgend angeordnet sind. Weiter ist es denkbar, dass in Breitenrichtung des Fahrzeugsitzes mindestens eine Nut, bevorzugt zwei Nuten nebeneinander verlaufend angeordnet sind.

Es können diese Nuten bezogen auf die Längsrichtung des Fahrzeugsitzes einen geradlinigen oder bogenförmigen Verlauf aufweisen.

Denkbar ist auch, dass statt der erläuterten Anordnung die Nuten auf der Sitztragschale angeordnet und die Nutensteine mit dem Sitzteil fest verbunden sind. Des Weiteren können in beiden Varianten statt der Nutensteine längliche Erhebungen verwendet werden, weiter bevorzugt sind diese beispielsweise im Querschnitt im Wesentlichen dreiecksförmig.

Aus der Norm DIN EN ISO 5353 ist die Ermittlung des sogenannten Sitz-Index-Punkts (SIP) für einen Sitzinsassen mit 75 kg Körpergewicht bekannt. Dieser repräsentiert den Schnittpunkt zwischen den theoretischen Achsen des menschlichen Oberkörpers und des menschlichen Oberschenkels auf der senkrechten Ebene durch die Sitzmittellinie. Demnach wird der Hüftpunkt (H-Punkt) eines Menschenmodells mit dem SIP in Übereinstimmung gebracht und simuliert die Lage des Beckens im gewichtsbelasteten Sitz. Gemäß der vorliegenden Erfindung und deren kompakte Bauweise ist es möglich, den SIP relativ tief anzuordnen, was zum Komfort des Sitzinsassen beiträgt.

Weiterhin gilt, dass beim erfindungsgemäßen Sitz die Führungselemente zur Führung der Verstellbewegung des Sitzteils ausschließlich zwischen Sitzteil und Sitzschalenelement angeordnet sind, insbesondere also unterhalb des Sitzteils und oberhalb des Sitzschalenelements. Dahingegen ist insbesondere der Raum seitlich neben dem Sitzteil und neben der Sitztragschale frei von zur erfindungsgemäßen Verstellbewegung des Sitzteils ausgestalteten Führungselementen.

Um den Komfort des Sitzinsassen weiter zu erhöhen, hat es sich in der Praxis bewährt, wenn eine Position des Sitzteils in Bezug auf eine Position der Sitztragschale mittels einer manuell lösbaren Arretiervorrichtung arretierbar ist, wobei die Arretiervorrichtung einen am Sitzteil angeordneten manuellen Betätigungshebel mit Materialausnehmungen umfasst, in welchen mindestens ein komplementär dazu ausgestaltetes, an der Sitztragschale angeordnetes Stegelement einrastbar ist. Dieser Betätigungshebel kann baulich einfach als Lochblech ausgestaltet sein.

Hierbei durchdringen das mindestens eine oder mehrere einzelne Stegelemente die entsprechenden Materialausnehmungen, wodurch der Betätigungshebel, welcher bevorzugt am vorderen Ende des Sitzteils, weiter bevorzugt an einer Unterseite des Sitzteils und noch weiter bevorzugt zumindest teilweise zwischen den unterseitig angeordneten Nuten des Sitzteils angeordnet ist und damit das Sitzteil an der Sitztragschale festgelegt ist. In diesem Zustand ist die Position des Sitzteils gegenüber der Sitztragschale arretiert.

Wird der Betätigungshebel beispielsweise durch einen Griff des Sitzinsassen nach oben ausgelenkt, so rücken die Stegelemente auf der Sitztragschale aus den Materialausnehmungen auf dem Betätigungshebel aus, wodurch die Arretierung der Position des Sitzteils gegenüber der Sitztragschale aufgehoben ist. In diesem Zustand lässt sich also die Verstellbewegung des Sitzteils gegenüber der Sitztragschale durchführen.

Aus der Praxis hat es sich insbesondere in Bezug auf die Größenverteilung der Sitzinsassen bewährt, wenn hinsichtlich der Verstellbewegung des Sitzteils ein erster maximaler Verstellweg des vorderen Endes des Sitzteils gegenüber der Sitztragschale nach vorne einen Wert aus einem Bereich von 40 mm bis 80 mm, bevorzugt von 60 mm aufweist, und/ oder ein zweiter maximaler Verstellweg des vorderen Endes des Sitzteils gegenüber der Sitztragschale nach oben einen Wert aus einem Bereich von 10 mm bis 30 mm, bevorzugt von 20 mm aufweist. Diese Abmessungen werden auch den Platzverhältnissen innerhalb eines kleinen Fahrzeugs gerecht.

Weiterhin hat es sich bewährt, wenn hinsichtlich der Verstellbewegung des Sitzteils die Neigung des Sitzteils in einer hinteren Maximalposition des Sitzteils einen Wert aufweist, welcher einen Unterschied von 2° bis 10°, bevorzugt von 5° zu einem Wert der Neigung des Sitzteils in einer vorderen Maximalposition des Sitzteils aufweist.

Wenn das Sitzteil sich in der hinteren Maximalposition befindet, ist es bevorzugt, wenn das hintere Ende des Sitzteils und eine hintere Fläche des Rückenlehnenteils in Längsrichtung des Sitzes betrachtet im Wesentlichen auf einer Linie angeordnet sind. Weiterhin gilt, dass in diesem Fall das Sitzteil und das Rückenlehnenteil bevorzugt zueinander unmittelbar angrenzend ausgebildet sind.

Wenn das Sitzteil sich in der vorderen Maximalposition befindet, ist es bevorzugt, wenn das hintere Ende des Sitzteils und eine vordere Fläche des Rückenlehnenteils in Längsrichtung des Sitzes betrachtet im Wesentlichen auf einer Linie angeordnet sind. Weiterhin gilt, dass in diesem Fall das Sitzteil und das Rückenlehnenteil bevorzugt zueinander beabstandet ausgebildet sind.

Diese vorstehenden bevorzugten Anordnungen gelten insbesondere in dem Fall, wenn das Rückenlehnenteil im Wesentlichen senkrecht, also hinsichtlich seiner Längserstreckung im Wesentlichen parallel zur Höhenrichtung des Sitzes angeordnet ist.

Um dem Benutzer vor allem in der vorderen Maximalstellung trotz Abstand zwischen Sitzteil und Rückenlehnenteil einen hohen Komfort zu garantieren, hat es sich als vorteilhaft herausgestellt, wenn das hintere Ende des Sitzteils mit einem unteren Ende des Rückenlehnenteils mittels einer elastischen Verbindung verbunden ist. Diese elastische Verbindung ist bevorzugt über die gesamte Breite des Sitzteils ausgestaltet und kann beispielsweise mittels eines Gummibandes ausgestaltet sein, welches das Gesäß des Sitzinsassen abstützt. Es gilt allerdings, dass die Verstellbewegung des Sitzteils vom Rückenlehnenteil entkoppelt ist. Alternativ zu einer elastischen Verbindung kann es vorteilhaft sein, wenn das Sitzteil vom Rückenlehnenteil beabstandet und zu diesem verbindungselementfrei angeordnet ist.

Weiter ist es bevorzugt, dass das Rückenlehnenteil mit der Sitztragschale verbunden und/ oder gegenüber der Sitztragschale unabhängig von der Verstellbewegung des Sitzteils verschwenkbar ist. Auch dies sorgt für einen erhöhten Komfort für den Sitzinsassen. Außerdem kann die Mechanik der Verschwenkung des Rückenlehnenteils vereinfacht werden, wenn es mit einem in diesem Fall bevorzugt starr zu den restlichen Komponenten des Fahrzeugsitzes angeordneten Element wie der Sitztragschale verbunden ist.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
Fig. 1a-1c in schematischen Seitenansichten verschiedene Positionen des Sitzteils des erfindungsgemäßen Fahrzeugsitzes;
Fig. 2a-2g verschiedene Ansichten und Verstellpositionen des Sitzteils und der Sitzschale;
Fig. 3a, 3b in Prinzipskizzen verschiedene Verstellbewegungen des Sitzteils gegenüber der Sitztragschale anhand dargestellter Kurvenbahnen und Geraden;
Fig. 4a-4c verschiedene Ansichten des Sitzteils und der Sitzschale.

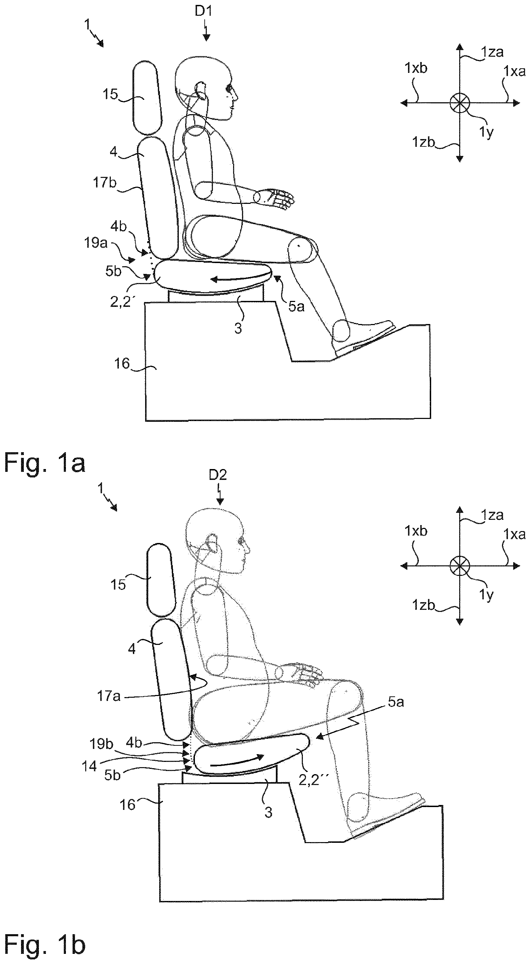

In Fig. 1a und 1b sind jeweils schematische Seitenansichten eines erfindungsgemäßen Fahrzeugsitzes 1 dargestellt. Dieser Fahrzeugsitz 1 mit Längsrichtung 1x, Breitenrichtung 1y und Höhenrichtung 1z weist vorliegend ein Kopfstützenteil 15, ein Rückenlehnenteil 4, ein Sitzteil 2 sowie eine Sitztragschale 3 auf. Beispielsweise ist die Sitztragschale 3 mit einer Karosserie 16 eines nicht dargestellten Fahrzeugs verbindbar.

Auf den Fahrzeugsitzen 1 gemäß Fig. 1a und Fig. 1b dargestellte Dummies D1, D2 markieren vereinfacht angenommen jene beiden Grenzen, innerhalb der 90% der Größen aller möglichen Sitzinsassen liegen. Mit anderen Worten sind 5% aller möglichen Sitzinsassen kleiner als der Dummy D1 und weitere 5% aller möglichen Sitzinsassen größer als der Dummy D2. Der erfindungsgemäße Fahrzeugsitz 1 ist also zumindest für 90% aller möglichen Sitzinsassen geeignet.

Die Neigung des Sitzes 1 sei im Folgenden so definiert, dass eine positive Neigung bedeutet, dass in Fahrtrichtung 1xa betrachtet das hintere Ende 5b des Fahrzeugsitzes 1 in Bezug auf die Höhenrichtung 1z tiefer liegt als das vordere Ende 5a (wie in Fig. 1b dargestellt). Umgekehrt bedeutet eine negative Neigung, dass das hintere Ende 5b des Fahrzeugsitzes 1 in Bezug auf die Höhenrichtung 1z höher liegt als das vordere Ende 5a. In Fig. 1a ist dagegen eine Neigung mit dem Wert Null dargestellt.

Das vordere 5a und das hintere Ende 5b des Sitzteils 2 sind insbesondere so zu verstehen, dass diese Referenzpunkte darstellen, welche auf halber Höhe des Sitzteils 2 angeordnet sind.

Analog dazu ist das untere Ende 4b des Rückenlehnenteils 4 als ein auf halber Breite des Rückenlehnenteils 4 angeordneter Referenzpunkt zu verstehen.

Der Dummy D1 ist beispielsweise eine Frau, die aufgrund ihrer geringen Körpergröße das Sitzteil 2 so angeordnet hat, dass es sich hinsichtlich seiner Tiefe in einer hinteren Maximalposition 2' befindet. Damit nimmt vorliegend die Neigung des Sitzteils 2 eine Minimalposition ein und ist vorliegend gleich Null. Denkbar wäre aber auch, dass die Minimalposition einen geringen negativen oder geringen positiven Wert darstellt.

Dahingegen ist der Dummy D2 beispielsweise ein Mann, der aufgrund seiner hoch gewachsenen Körpergröße das Sitzteil 2 so angeordnet hat, dass es sich hinsichtlich seiner Tiefe in einer vorderen Maximalposition 2" befindet. Damit nimmt vorliegend die Neigung des Sitzteils 2 eine Maximalposition ein und ist vorliegend beispielsweise um 5° höher als die Neigung des Sitzteils 2 in Minimalposition.

Gemäß Fig. 1a ist zu sehen, dass das hintere Ende 5b des Sitzteils 2 und eine hintere Fläche 17b des Rückenlehnenteils 4 in Längsrichtung 1xa, 1xb des Sitzes 1 betrachtet im Wesentlichen auf einer (hier gestrichelt eingezeichneten) ersten Linie 19a angeordnet sind. Weiterhin gilt, dass in diesem Fall das Sitzteil 2 und das Rückenlehnenteil 4 zueinander unmittelbar angrenzend ausgebildet sind; in diesem Fall bildet zumindest das untere Ende 4b des Rückenlehnenteils 4 Kontakt zum Sitzteil 2 aus.

Gemäß Fig. 1b ist zu sehen, dass das hintere Ende 5b des Sitzteils 2 und eine vordere Fläche 17a des Rückenlehnenteils 4 in Längsrichtung 1xa, 1xb des Sitzes 1 betrachtet im Wesentlichen auf einer (hier gestrichelt eingezeichneten) zweiten Linie 19b angeordnet sind. Weiterhin gilt, dass in diesem Fall das Sitzteil 2 und das Rückenlehnenteil 4 zueinander beabstandet ausgebildet sind.

Diese vorstehenden bevorzugten Anordnungen gelten für den gemäß den Figuren 1a und 1b gezeigten Fall, wenn das Rückenlehnenteil 4 im Wesentlichen senkrecht, also hinsichtlich seiner Längserstreckung parallel zur Höhenrichtung 1z des Sitzes 1 angeordnet ist.

Vorliegend ist das Sitzteil 2 unterseitig schalenförmig ausgebildet, wobei mittels der Verstellbewegung des Sitzteils 2 das vordere Ende 5a des Sitzteils 2 gegenüber der unterhalb des Sitzteils 2 angeordneten Sitztragschale 3 kombiniert nach vorne 1xa und nach oben 1za verschiebbar und somit die Neigung des Sitzteils 2 verstellbar ist.

Bevorzugt ist das Kopfstützenteil 15 mechanisch fest mit dem Rückenlehnenteil 4 verbunden. Weiter bevorzugt ist das Kopfstützenteil 15 gegenüber dem Rückenlehnenteil 4 schwenkbar und/ oder höhenverstellbar angeordnet.

Das Rückenlehnenteil 4 ist vorliegend mit der Sitztragschale 3 mittels einer nicht gezeigten mechanisch festen Verbindung verbunden und gegenüber der Sitztragschale 3 verschwenkbar angeordnet, so dass die Neigung des Rückenlehnenteils 4 einstellbar ist. Alternativ kann das Rückenlehnenteil 4 mit der Sitztragschale 3 mechanisch starr verbunden sein.

In Fig. 1b ist eine elastische Verbindung 14 angedeutet, mittels welcher das hintere Ende 5b des Sitzteils 2 mit einem unteren Ende 4b des Rückenlehnenteils 4 verbunden ist. Beispielsweise ist diese elastische Verbindung 14 in Form eines dehnbaren Stoffabschnitts oder eines Gummiwerkstoffs ausgestaltet.

Wie insbesondere aus einem Vergleich der Figuren 1a und 1b zu sehen ist, ist die Verstellbewegung des Sitzteils 2 vom Rückenlehnenteil 4 entkoppelt. Mit anderen Worten werden weder die Position noch die Neigung noch eine Wölbung des Rückenlehnenteils 4 verändert, wenn die Verstellbewegung des Sitzteils 2 stattfindet. Umgekehrt gilt natürlich auch, dass eine Verschwenkbewegung des Rückenlehnenteils 4 von einer Verstellbewegung des Sitzteils 2 entkoppelt ist, so dass auch die Position des Sitzteils 2 nicht verändert wird, wenn die Rückenlehnenteil 4 verschwenkt wird.

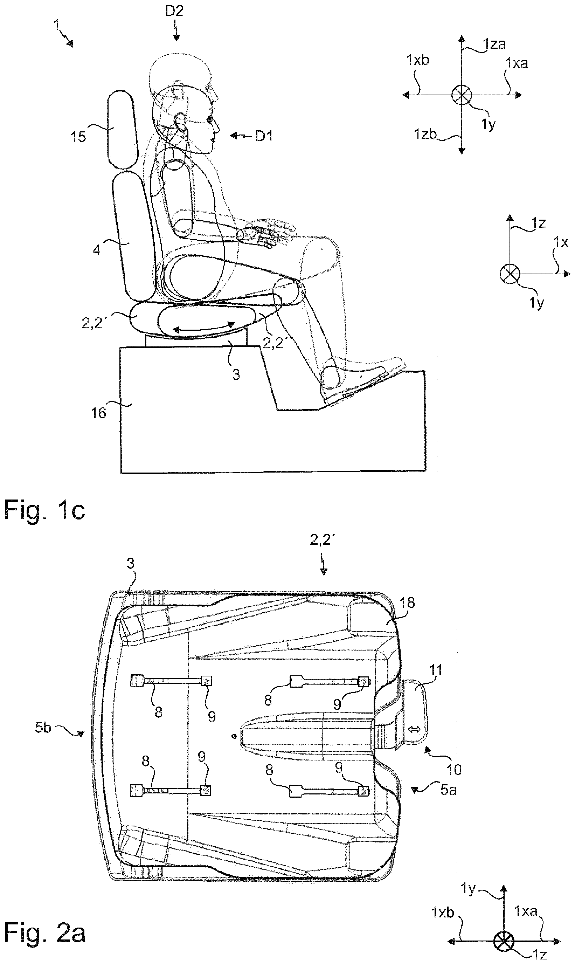

In Fig. 1c sind zum besseren Vergleich beide Dummies D1, D2 übereinander gelagert dargestellt.

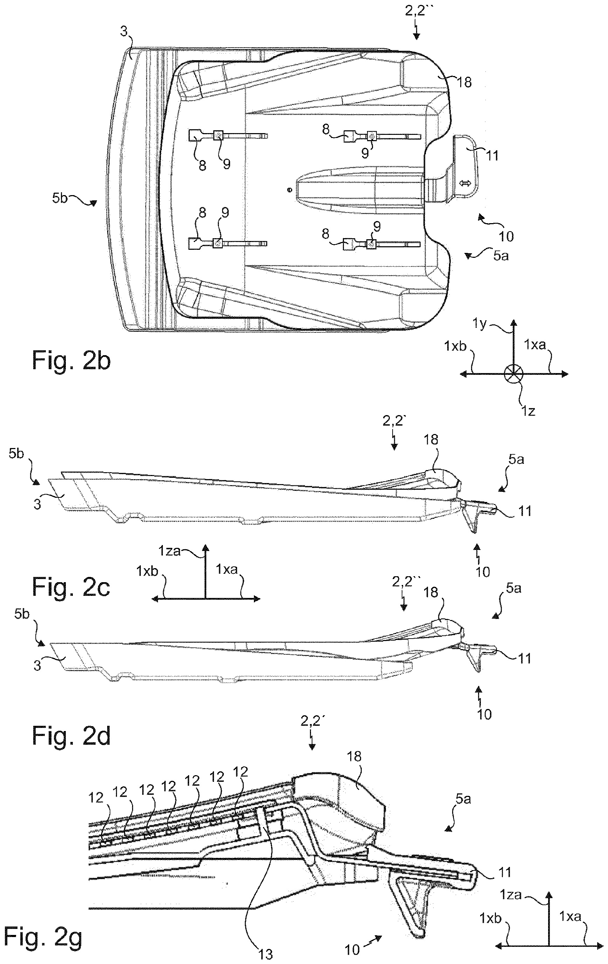

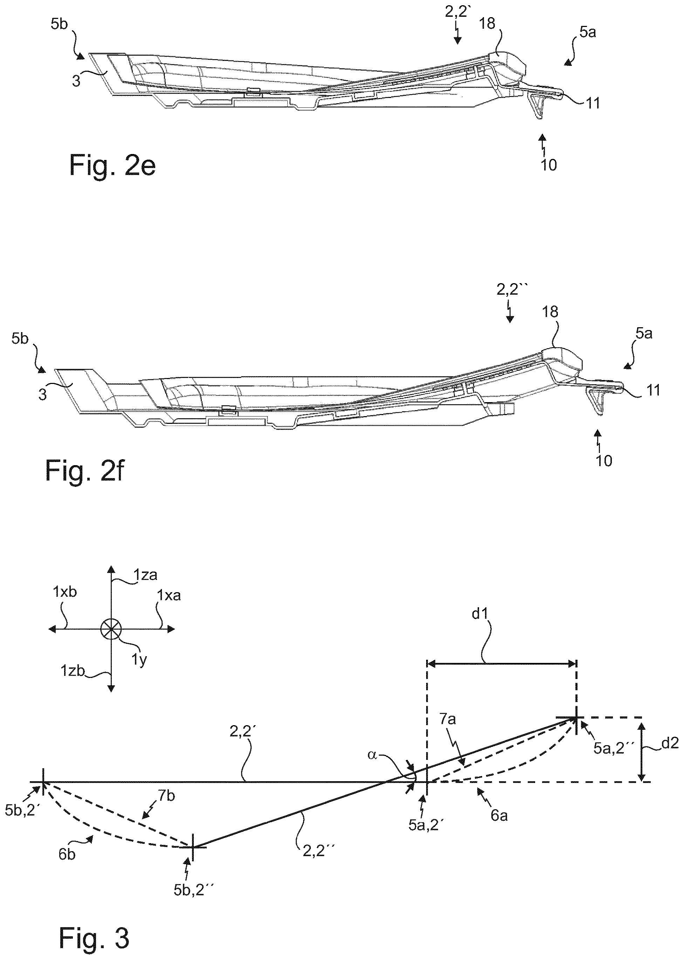

Gemäß den Ansichten in den Fig. 2a und 2b, 2c und 2d sowie 2e und 2f ist das unverkleidete Sitzteil 2 ohne ein Polsterteil bzw. eine Sitzteilschale 18 des Sitzteils 2 in verschiedenen Positionen gegenüber der Sitztragschale 3 dargestellt. Dabei zeigen die Figuren 2a, 2c und 2e die hintere Maximalposition 2'und die Figuren 2b, 2d und 2f die vordere Maximalposition 2" des Sitzteils 2. Die Figuren 2a und 2b repräsentieren Draufsichten, die Figuren 2c und 2d Seitenansichten sowie die Figuren 2e und 2f Querschnittsansichten der Anordnung aus Sitzteilschale 18 und Sitztragschale 3. Ferner ist mittels der Fig. 2g ein Ausschnitt der Fig. 2e abgebildet.

In dem Sitzteil 2 bzw. in der Sitzteilschale 18 sind Nuten 8 ausgestaltet, vorliegend insgesamt vier an der Zahl, wobei jeweils zwei hintereinander (eine davon benachbart zum vorderen Ende 5a und eine weitere davon benachbart zum hinteren Ende 5b) und jeweils zwei parallel zueinander und in Längsrichtung des Sitzes 1 auf gleicher Höhe angeordnet sind. Die Nuten 8 weisen Endanschläge auf, d.h. dass ein Verlauf der Nuten 8 und damit der Verstellweg des Sitzteils 2 in Längsrichtung 1xa, 1xb des Sitzes 1 begrenzt ist.

Gleichzeitig sind Nutensteine 9 abgebildet, welche auf der Sitztragschale 3 oberseitig und komplementär zu den Nuten 8 angeordnet sind. Diese Nutensteine 9 sind bei der Verstellbewegung des Sitzteils 2 gegenüber der Sitztragschale 3 als Gleitelemente innerhalb der Nuten 8 führbar. Deutlich ist zu sehen, dass sich die Position der Nutensteine 9 relativ zu den Nuten 8 im Vergleich von Fig. 2a zu Fig. 2b ändert.

Bevorzugt sind diese Nutensteine 9 mittels dreier Abschnitte ausgestaltet. Ein erster Abschnitt stellt die Verbindung zur Sitztragschale 3 dar. Ein zweiter, auf den ersten Abschnitt folgender Abschnitt ist die Nuten 8 der Sitzteilschale 18 durchdringend angeordnet. Ein dritter, auf den zweiten Abschnitt folgender Abschnitt ist auf der der Sitztragschale 3 abgewandten Seite der Sitzteilschale angeordnet und bevorzugt breiter als die Breite der Nuten 8 ausgestaltet, so dass per Formschluss eine sichere Verbindung zwischen Sitzteil 2 und Sitztragschale 3 gewährleistet ist.

Ebenfalls abgebildet ist insbesondere gemäß den Figuren 2e und 2f eine manuell lösbare Arretiervorrichtung 10, mittels welcher die Position des Sitzteils 2 in Bezug auf eine Position der Sitztragschale 3 arretierbar ist. Diese Arretiervorrichtung 10 umfasst einen am vorderen Ende 5a des Sitzteils 2 angeordneten manuellen Betätigungshebel 11 mit Materialausnehmungen 12, welche vorliegend rechteckförmig ausgestaltet sind und in welchen ein komplementär dazu ausgestaltetes Stegelement 13 einrastbar ist. Dieses Stegelement 13 ist an der Sitztragschale 3 angeordnet.

Das Zusammenwirken von Stegelement 13 und Materialausnehmungen 12 ist gemäß Fig. 2g vergrößert abgebildet. Deutlich ist, dass das Stegelement 13 in der Fig. 2e in einer näher dem Betätigungshebel 11 zugewandten Materialausnehmung 12 einrastet als in der Fig. 2f.

Gemäß Fig. 3 sind in einer Prinzipskizze verschiedene Führungsgeometrien zu sehen, mittels welcher die Verstellbewegung des Sitzteils 2 realisiert werden kann. Dazu ist ein erster Punkt abgebildet, welcher die Position des hinteren Endes 5b des Sitzteils 2 in der hinteren Maximalstellung 2' darstellen soll. Dieser liegt in diesem gezeigten Beispiel in Längsrichtung 1xa, 1xb des Fahrzeugsitzes 1 auf einer Höhe mit einem zweiten Punkt, welcher die Position des vorderen Endes 5a des Sitzteils 2 in der hinteren Maximalstellung 2' darstellen soll.

Ebenfalls abgebildet sind ein dritter Punkt, welcher die Position des hinteren Endes 5b des Sitzteils 2 in der vorderen Maximalstellung 2" darstellen soll, und ein vierter Punkt, welcher die Position des vorderen Endes 5a des Sitzteils 2 in der vorderen Maximalstellung 2" darstellen soll.

Der erste und der dritte Punkt sowie der zweite und der vierte Punkt sind jeweils miteinander durch eine Linie verbunden, welche die Neigungen des Sitzteils 2 in der hinteren Maximalstellung 2' bzw. in der vorderen Maximalstellung 2" repräsentieren sollen.

Der erste und der zweite Punkt sowie der dritte und der vierte Punkt sind jeweils miteinander durch eine Linie und einen Kreisbogenabschnitt verbunden. Dabei repräsentieren die Linien die Geraden 7a, 7b und die Kreisbogenabschnitte die Kurvenbahnen 6a, 6b, entlang welchen das vordere Ende 5a und/ oder ein hinteres Ende 5b des Sitzteils 2 gegenüber der Sitztragschale 3 mittels der Verstellbewegung des Sitzteils 2 verschiebbar sind. Es sei erwähnt, dass die Gerade 7a und die Kurvenbahn 6b Ausgestaltungen repräsentieren, die nicht zur vorliegenden Erfindung gehören.

Ebenfalls eingezeichnet sind Distanzen d1 und d2, welche hinsichtlich der Verstellbewegung des Sitzteils 2 den ersten maximalen Verstellweg des vorderen Endes 5a des Sitzteils 2 gegenüber der Sitztragschale 3 nach vorne 1xa (d1) sowie den zweiten maximalen Verstellweg des vorderen Endes 5a des Sitzteils 2 gegenüber der Sitztragschale 3 nach oben 1za (d2) darstellen.

Ferner ist ein Winkel α zwischen der Längserstreckung des Sitzteils 2 in der hinteren Maximalstellung 2' und der Längserstreckung des Sitzteils 2 in der vorderen Maximalstellung 2" zu sehen, welcher die maximale Veränderung des Grades der Neigung des Sitzteils 2 veranschaulicht.

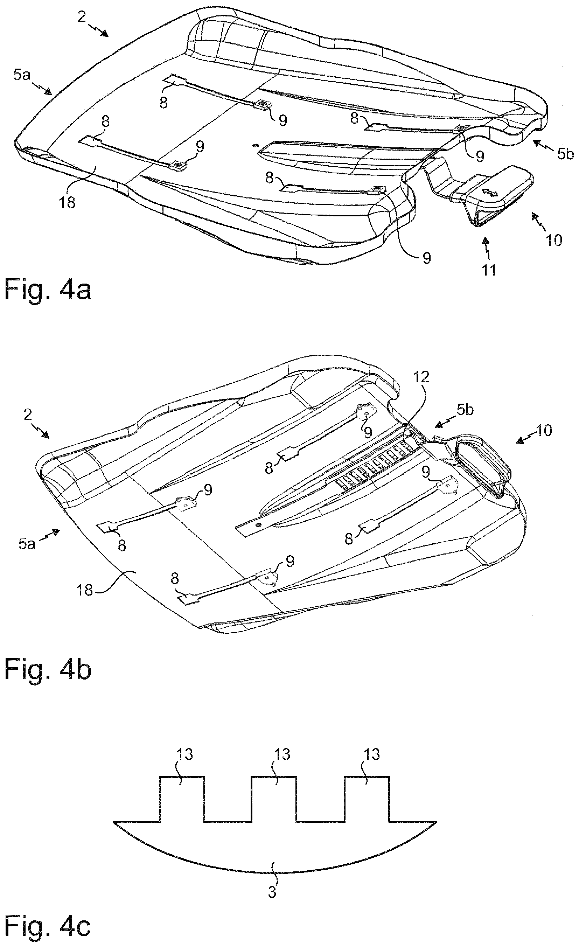

Das Sitzteil 2 ist in der Fig. 4a nochmals von schräg oben sowie in der Fig. 4b von schräg unten jeweils ohne ein Polsterteil dargestellt, so dass die unverkleidete Sitzteilschale 18 des Sitzteils 2 zu sehen ist. In dieser Sitzteilschale 18 des Sitzteils 2 sind die durchgehend angeordneten Nuten 8 zu sehen.

Vorliegend bildet der Verlauf der Nuten 8 eine der gemäß Fig. 3 abgebildeten Varianten ab, so dass die Verstellbewegung des Sitzteils 2 auf der Gerade 7b und der Kurvenbahn 6a stattfindet. Die anderen Varianten, wonach die Verstellbewegung des Sitzteils 2 entweder auf den Geraden 7a und 7b, auf den Kurvenbahnen 6a und 6b oder auf der Gerade 7a und der Kurvenbahn 6b stattfindet, gehören nicht zur vorliegenden Erfindung.

Ebenfalls abgebildet ist gemäß den Figuren 4a und 4b die manuell lösbare Arretiervorrichtung 10, mittels welcher eine Position des Sitzteils 2 in Bezug auf eine Position der Sitztragschale 3 arretierbar ist. Die Fig. 4c zeigt hierbei eine weitere Variante, gemäß der nicht nur ein, sondern mehrere Stegelemente 13 an der Sitztragschale 3 angeordnet sind. Dies erhöht die Zuverlässigkeit der Arretierung.

### Bezugszeichenliste

- 1: Fahrzeugsitz
- 1x: Längsrichtung
- 1xa: Richtung nach vorne, Fahrtrichtung
- 1xb: Richtung nach hinten
- 1y: Breitenrichtung
- 1z: Höhenrichtung
- 1za: Richtung nach oben
- 1zb: Richtung nach unten
- 2: Sitzteil
- 2', 2": Maximalposition
- 3: Sitztragschale
- 4: Rückenlehnenteil
- 4b, 5a, 5b: Ende
- 6a, 6b: Kurvenbahn
- 7a, 7b: Gerade
- 8: Nut
- 9: Nutenstein
- 10: Arretiervorrichtung
- 11: Betätigungshebel
- 12: Materialausnehmung
- 13: Stegelement
- 14: elastische Verbindung
- 15: Kopfstützenteil
- 16: Karosserie
- 17a, 17b: Fläche
- 18: Sitzteilschale
- 19a, 19b: Linie
- d1, d2: Distanz
- D1, D2: Dummy
- α: Winkel

## Patentansprüche

1. Fahrzeugsitz (1) mit einem Sitzteil (2) und einem Rückenlehnenteil (4), wobei das Sitzteil (2) unterseitig schalenförmig ausgebildet ist, wobei mittels einer Verstellbewegung des Sitzteils (2) gegenüber einer unterhalb des Sitzteils (2) angeordneten Sitztragschale (3) zumindest ein vorderes Ende (5a) des Sitzteils (2) kombiniert nach vorne (1xa) und nach oben (1za) verschiebbar und die Neigung des Sitzteils (2) verstellbar ist,
**dadurch gekennzeichnet, dass**
mittels der Verstellbewegung des Sitzteils (2) das vordere Ende (5a) des Sitzteils (2) gegenüber der Sitztragschale (3) entlang einer Kurvenbahn (6a) und ein hinteres Ende (5b) des Sitzteils (2) gegenüber der Sitztragschale (3) entlang einer Geraden (7b) nach vorne (1xa) verschiebbar ist.

2. Fahrzeugsitz (1) nach Anspruch 1,
**dadurch gekennzeichnet, dass**
das Sitzteil (2) unterseitig Nuten (8) aufweist und auf der Sitztragschale (3) oberseitig komplementär dazu ausgebildete Nutensteine (9) angeordnet sind, welche bei der Verstellbewegung des Sitzteils (2) gegenüber der Sitztragschale (3) als Gleitelemente innerhalb der Nuten (8) führbar sind.

3. Fahrzeugsitz (1) nach einem der vorhergehenden Ansprüche,
**dadurch gekennzeichnet, dass**
eine Position des Sitzteils (2) in Bezug auf eine Position der Sitztragschale (3) mittels einer manuell lösbaren Arretiervorrichtung (10) arretierbar ist, wobei die Arretiervorrichtung(10) einen am Sitzteil (2) angeordneten manuellen Betätigungshebel (11) mit Materialausnehmungen (12) umfasst, in welchen mindestens ein komplementär dazu ausgestaltetes, an der Sitztragschale (3) angeordnetes Stegelement (13) einrastbar ist.

4. Fahrzeugsitz (1) nach einem der vorhergehenden Ansprüche,
**dadurch gekennzeichnet, dass**
hinsichtlich der Verstellbewegung des Sitzteils (2) ein erster maximaler Verstellweg des vorderen Endes (5a) des Sitzteils (2) gegenüber der Sitztragschale (3) nach vorne (1xa) einen Wert aus einem Bereich von 40 mm bis 80 mm, bevorzugt von 60 mm aufweist, und/ oder ein zweiter maximaler Verstellweg des vorderen Endes (5a) des Sitzteils (2) gegenüber der Sitztragschale (3) nach oben (1za) einen Wert aus einem Bereich von 10 mm bis 30 mm, bevorzugt von 20 mm aufweist.

5. Fahrzeugsitz (1) nach einem der vorhergehenden Ansprüche,
**dadurch gekennzeichnet, dass**
hinsichtlich der Verstellbewegung des Sitzteils (2) die Neigung des Sitzteils (2) in einer hinteren Maximalposition des Sitzteils (2) einen Wert aufweist, welcher einen Unterschied von 2° bis 10°, bevorzugt von 5° zu einem Wert der Neigung des Sitzteils (2) in einer vorderen Maximalposition des Sitzteils aufweist.

6. Fahrzeugsitz (1) nach einem der vorhergehenden Ansprüche,
**dadurch gekennzeichnet, dass**
das hintere Ende (5b) des Sitzteils (2) mit einem unteren Ende (4b) des Rückenlehnenteils (4) mittels einer elastischen Verbindung (14) verbunden ist, wobei die Verstellbewegung des Sitzteils (2) vom Rückenlehnenteil (4) entkoppelt ist.

7. Fahrzeugsitz (1) nach einem der vorhergehenden Ansprüche,
**dadurch gekennzeichnet, dass**
das Rückenlehnenteil (4) mit der Sitztragschale (3) verbunden und/ oder gegenüber der Sitztragschale (3) unabhängig von der Verstellbewegung des Sitzteils (2) verschwenkbar ist.

## Claims

1. Vehicle seat (1) comprising a seat part (2) and a backrest part (4), wherein the seat part (2) is configured shell-shaped on the lower face, at least one front end (5a) of the seat part (2) being displaceable forwards (1xa) and upwards (1za) in a combined manner and the inclination of the seat part (2) being adjustable by means of an adjustment movement of the seat part (2) with respect to a seat support shell (3) arranged below the seat part (2),
**characterised in that**
by means of the adjustment movement of the seat part (2) the front end (5a) of the seat part (2) is displaceable forwards (1xa) along a curved path (6a) with respect to the seat support shell (3) and a rear end (5b) of the seat part (2) is displaceable forwards (1xa) along a straight line (7b) with respect to the seat support shell (3).

2. Vehicle seat (1) according to claim 1,
**characterised in that**
the seat part (2) comprises grooves (8) on the lower face and sliding blocks (9) formed in a complementary manner are arranged on the upper face of the seat support shell (3), said sliding blocks being guidable within the grooves (8) as sliding elements during the adjustment movement of the seat part (2) with respect to the seat support shell (3).

3. Vehicle seat (1) according to any of the preceding claims,
**characterised in that**
a position of the seat part (2) is lockable with respect to a position of the seat support shell (3) by means of a manually releasable locking device (10), the locking device (10) comprising a manual actuation lever (11) arranged on the seat part (2) and comprising material recesses (12) into which at least one web element (13), configured in a complementary manner and arranged on the seat support shell (3), can latch.

4. Vehicle seat (1) according to any of the preceding claims,
**characterised in that**
for the adjustment movement of the seat part (2) a first maximum adjustment distance of the front end (5a) of the seat part (2) forwards (1xa) with respect to the seat support shell (3) is in a range of 40 mm to 80 mm, preferably 60 mm, and/or a second maximum adjustment distance of the front end (5a) of the seat part (2) upwards (1za) with respect to the seat support shell (3) is in a range of 10 mm to 30 mm, preferably 20 mm.

5. Vehicle seat (1) according to any of the preceding claims,
**characterised in that**
for the adjustment movement of the seat part (2) the inclination of the seat part (2) in a rear maximum position of the seat part (2) has a difference of 2° to 10°, preferably 5°, from the inclination of the seat part (2) in a front maximum position of the seat part.

6. Vehicle seat (1) according to any of the preceding claims,
**characterised in that**
the rear end (5b) of the seat part (2) is connected to a lower end (4b) of the backrest part (4) by means of a resilient connection (14), the adjustment movement of the seat part (2) being decoupled from the backrest part (4).

7. Vehicle seat (1) according to any of the preceding claims,
**characterised in that**
the backrest part (4) is connected to the seat support shell (3) and/or is pivotable with respect to the seat support shell (3) independently of the adjustment movement of the seat part (2).

## Revendications

1. Siège de véhicule (1) comportant une partie assise (2) et une partie dossier (4), dans lequel la partie assise (2) est réalisée sous forme de coque sur la face inférieure, dans lequel, au moyen d'un mouvement de réglage de la partie assise (2) par rapport à une coque de support d'assise (3) disposée au-dessous de la partie assise (2), au moins une extrémité avant (5a) de la partie assise (2) est déplaçable vers l'avant (1xa) et vers le haut (1za) de façon combinée et l'inclinaison de la partie assise (2) est réglable,
**caractérisé par le fait qu'**
au moyen du mouvement de réglage de la partie assise (2), l'extrémité avant (5a) de la partie assise (2) est déplaçable vers l'avant (1xa) par rapport à la coque de support d'assise (3) le long d'une trajectoire courbe (6a) et une extrémité arrière (5b) de la partie assise (2) est déplaçable vers l'avant (1xa) par rapport à la coque de support d'assise (3) le long d'une droite (7b).

2. Siège de véhicule (1) selon la revendication 1,
**caractérisé par le fait que**
la partie assise (2) présente des rainures (8) sur la face inférieure et sur la coque de support d'assise (3) sont disposés sur la face supérieure des coulisseaux (9) formés de façon complémentaire à celles-ci, lesquels sont aptes à être guidés à l'intérieur des rainures (8) en tant qu'éléments coulissants lors du mouvement de réglage de la partie assise (2) par rapport à la coque de support d'assise (3).

3. Siège de véhicule (1) selon l'une des revendications précédentes,
**caractérisé par le fait qu'**
une position de la partie assise (2) est apte à être bloquée par rapport à une position de la coque de support d'assise (3) au moyen d'un dispositif de blocage (10) libérable manuellement, le dispositif de blocage (10) comportant un levier d'actionnement manuel (11) disposé sur la partie assise (2) et comportant des évidements de matière (12) dans lesquels est encliquetable au moins un élément nervuré (13) disposé sur la coque de support d'assise (3), réalisé de façon complémentaire à ceux-ci.

4. Siège de véhicule (1) selon l'une des revendications précédentes,
**caractérisé par le fait qu'**
en ce qui concerne le mouvement de réglage de la partie assise (2), une première distance de réglage maximale de l'extrémité avant (5a) de la partie assise (2) par rapport à la coque de support d'assise (3) vers l'avant (1xa) présente une valeur se situant dans une plage de 40 mm à 80 mm, de préférence de 60 mm, et/ou une seconde distance de réglage maximale de l'extrémité avant (5a) de la partie assise (2) par rapport à la coque de support d'assise (3) vers le haut (1za) présente une valeur se situant dans une plage de 10 mm à 30 mm, de préférence de 20 mm.

5. Siège de véhicule (1) selon l'une des revendications précédentes,
**caractérisé par le fait qu'**
en ce qui concerne le mouvement de réglage de la partie assise (2), l'inclinaison de la partie assise (2) dans une position maximale arrière de la partie assise (2) présente une valeur qui présente une différence de 2° à 10°, de préférence de 5°, par rapport à une valeur de l'inclinaison de la partie assise (2) dans un position maximale avant de la partie assise.

6. Siège de véhicule (1) selon l'une des revendications précédentes,
**caractérisé par le fait que**
l'extrémité arrière (5b) de la partie assise (2) est reliée à une extrémité inférieure (4b) de la partie dossier (4) au moyen d'une liaison élastique (14), le mouvement de réglage de la partie assise (2) étant découplé de la partie dossier (4).

7. Siège de véhicule (1) selon l'une des revendications précédentes,
**caractérisé par le fait que**
la partie dossier (4) est reliée à la coque de support d'assise (3) et/ou est apte à pivoter par rapport à la coque de support d'assise (3) indépendamment du mouvement de réglage de la partie assise (2).
